# EUROPÄISCHE PATENTSCHRIFT

(11) **EP 2 088 012 B1**
(45) Veröffentlichungstag und Bekanntmachung des Hinweises auf die Patenterteilung: **23.03.2016**
(21) Anmeldenummer: 09001018.2
(22) Anmeldetag: 26.01.2009
(51) Int. Cl.: B60H 1/00, H01M 10/44, H02J 7/00, H01M 10/52, H01M 10/06, H01M 10/62, H01M 10/61

(54) **Ladegerät für eine Batterie eines Fahrzeugs**
Charger for a battery of a vehicle
Appareil de chargement pour une batterie d'un véhicule

(30) Priorität: 06.02.2008 DE 102008007790
(43) Veröffentlichungstag der Anmeldung: 12.08.2009
(73) Patentinhaber: Jungheinrich Aktiengesellschaft, 22047 Hamburg (DE)
(72) Erfinder: Opitz, Michael, 23866 Nahe (DE); Rautmann, Jürgen, 24558 Henstedt-Ulzburg (DE); Taube, Stephan, 22846 Norderstedt (DE)
(74) Vertreter: Hauck Patentanwaltspartnerschaft mbB

(56) Entgegenhaltungen:
- DE-A1- 3 826 262
- DE-A1- 10 055 620
- JP-A- 2000 125 416
- US-A- 5 596 261
- US-A- 5 652 500
- US-A1- 2002 197 527

## Beschreibung

Die Erfindung betrifft ein Ladegerät für eine Batterie eines Fahrzeugs, insbesondere eines Flurförderzeugs, wobei das Ladegerät zum Laden der Batterie an die Batterie angesetzt werden kann. Der Einsatz von Batterien zum Betrieb von Flurförderzeugen ist seit langem bekannt. Dabei dienen die Batterien zur elektrischen Versorgung beispielsweise des Fahrantriebs oder des Hubaggregats der Fahrzeuge. Die Batterien sind üblicherweise wiederaufladbar, also Akkumulatoren. Dazu sind Ladegeräte bekannt, die zum Laden der Batterien an diese angesetzt werden können. Über eine Verbindung des Ladegeräts mit einem elektrischen Netz erfolgt der Ladevorgang. Die Batterien können fest in den Fahrzeugen installiert sein oder aus diesen entnehmbar sein, beispielsweise für den Ladevorgang. Ebenso können die Ladegeräte dauerhaft zum Laden an die Batterie angesetzt sein oder an diese für den Ladevorgang ansetzbar und anschließend wieder entfernbar sein.

Während des Ladevorgangs kommt es zu einer Erwärmung des Ladegeräts, insbesondere seiner Leistungselektronik. Daher ist eine Kühlung erforderlich. Außerdem kommt es insbesondere nach einem Laden der Batterie über ihre Nennkapazität hinaus zu einem Umsetzen des größeren Teils der der Batterie zugeführten Energie in Wärme oder in Elektrolyse zu Wasser, wobei Wasserstoff entsteht. Der Wasserstoff tritt gasförmig aus der Batterie aus. Dieser Vorgang wird auch als "Entgasen" oder "Ausgasen" bezeichnet. Der Wasserstoff gelangt in den die Batterie aufnehmenden Raum. Dabei besteht die Gefahr, dass sich ein zündfähiges Gemisch aus Wasserstoff und Sauerstoff bildet. Daher muss das aus der Batterie austretende Gas abgeführt werden.

Es ist bekannt, einerseits eine Kühlungseinrichtung für das Ladegerät, beispielsweise eine Lüftungseinrichtung, und zusätzlich eine Einrichtung zum Abführen von aus der Batterie austretenden Gasen, zum Beispiel eine weitere Lüftungseinrichtung, vorzusehen. Dies ist jedoch aufwendig und somit teuer und vergrößert den erforderlichen Bauraum.

Aus JP 2000 125416 A ist allgemein bekannt geworden, einem Ladegerät für eine Batterie einen Lüfter zuzuordnen. Aus US 2002/197527 A1 ist bekannt geworden, ein Ladegerät seitlich an ein Batteriegehäuse anzusetzen, wenn die Batterie geladen werden soll. Ein einzelne Batterien aufnehmendes Gehäuse weist auf gegenüberliegenden Seiten Lüfteröffnungen auf, durch die Kühlluft hindurchtritt, wenn Lüfter des Ladegeräts in Betrieb sind. Die Öffnungen im Gehäuse sind durch einen Schieber normalerweise geschlossen, wobei der Schieber durch Zusammenwirken von Vorsprüngen zwischen Ladegerät und Batterie in die Öffnungsstellung verschoben wird, wenn das Ladegerät angesetzt wird.

Ausgehend von dem erläuterten Stand der Technik liegt der Erfindung die Aufgabe zugrunde, ein Ladegerät der eingangs genannten Art bereitzustellen, mit dem eine Kühlung des Ladegeräts und ein Abführen von aus der Batterie austretenden Gasen in einfacher und kostengünstiger Weise bei geringer Baugröße möglich ist.

Diese Aufgabe wird durch den Gegenstand des unabhängigen Patentanspruchs 1 gelöst. Vorteilhafte Ausgestaltungen finden sich in den abhängigen Ansprüchen, der Beschreibung sowie den Zeichnungen.

Ein Ladegerät für eine Batterie eines Fahrzeugs, insbesondere eines Flurförderzeugs ist zum Laden der Batterie an die Batterie angesetzt.

Das Ladegerät weist eine Lüftungseinrichtung mit mindestens einem Lüfter zum Fördern eines Luftstroms aufweist, wobei mit dem Luftstrom sowohl das Ladegerät gekühlt, als auch aus der Batterie beim Ladevorgang austretendes Gas abgeführt werden kann. Die Lüftungseinrichtung dient sowohl für die Kühlung des Ladegeräts als auch für das Abführen von aus der Batterie ausgetretenen Gasen. Insbesondere ist dabei nur ein (möglicherweise aufgeteilter und/oder umgelenkter) Luftstrom vorgesehen, über den sowohl die Kühlung, als auch die Abführung der Gase erfolgt. Der Luftstrom wird dabei so geführt, dass ein sicheres Abführen der besonders in der Schlussphase des Ladevorgangs aus der Batterie austretenden Gase aus dem Batterieraum bzw. Fahrzeuginnenraum, also dem die Batterie aufnehmenden Raum, gewährleistet ist. Die Konzentration von Wasserstoffgas im Batterieraum bzw. Fahrzeuginnenraum wird so zu jeder Zeit unterhalb der Zündfähigkeitskonzentration des Gemisches aus Wasserstoffgas und Luft gehalten. Gleichzeitig wird eine ausreichende Kühlung des Ladegeräts während des Ladevorgangs der Batterie sichergestellt.

Die Lüftungstechnik wird in synergetischer Weise sowohl für die Anforderung der Kühlung als auch für die Anforderung der Belüftung des Batterieraums genutzt. Die Baugröße der Vorrichtung ist dadurch minimiert und es wird eine Kostenersparnis erreicht. Gegenüber konventionell getrennt aufgebauten Lüftungssystemen ergibt sich darüber hinaus eine Energieersparnis, da über nur einen Luftstrom sowohl die Kühlung als auch die Gasabführung realisiert wird. Die Dimensionierung der Lüftungseinrichtung kann dabei ausschließlich auf Basis derjenigen Anforderung erfolgen, die den höheren Lüftungsbedarf hat. Der Lüfter der Lüftungseinrichtung kann ein elektrischer Lüfter sein.

Die Batterie weist üblicherweise eine Vielzahl von Batteriezellen in einem Batterietrog auf. Sie kann fest in dem Fahrzeug installiert sein. Es ist aber auch möglich, dass die Batterie beispielsweise für einen Ladevorgang aus dem Fahrzeug entfernbar ist. Das Ladegerät kann ein Einbauladegerät sein. Für einen Ladevorgang wird das Ladegerät mit einem elektrischen Netz verbunden. Das Ladegerät kann dauerhaft (zum Laden) an die Batterie angesetzt sein. Das Ladegerät kann aber auch nur für den jeweiligen Ladevorgang an die Batterie angesetzt werden und danach wieder entfernt werden, also lösbar an dieser befestigt sein.

Nach der Erfindung ist im an die Batterie angesetzten Zustand des Ladegeräts ist eine Mehrzahl Lüftungskanäle entlang einer Fläche des Ladegeräts gebildet sein, durch den der Luftstrom mit dem mindestens einen Lüfter förderbar ist. Die Lüftungskanäle verlaufen bei an die in das Fahrzeug eingesetzte Batterie angesetztem Ladegerät vertikal. Der Lüfter kann so angeordnet sein, dass der Luftstrom durch den Lüftungskanal gesaugt oder gedrückt wird. Auch ist es möglich, mit dem Lüfter einen Luftstrom zu erzeugen, der an der Öffnung des Lüftungskanals vorbeigeführt wird und so nach Art einer Venturi-Düse Luft durch den Lüftungskanal saugt. Die Lüftungskanäle sind entlang einer im an die Batterie angesetzten Zustand des Ladegeräts der Batterie zugewandten Außenfläche des Ladegeräts gebildet. Die die Lüftungskanäle aufweisende Außenfläche des Ladegeräts kann insbesondere an der im an die Batterie angesetzten Zustand des Ladegeräts dem Ladegerät zugewandten Außenfläche der Batterie befestigbar sein. Die Außenfläche der Batterie kann eine Außenwand der Batterie bzw. eine Außenwand des die Batteriezellen enthaltenden Batterietrogs sein. Dabei kann die im an die Batterie angesetzten Zustand des Ladegeräts der Batterie zugewandte Außenfläche des Ladegeräts Kühlrippen aufweisen, die im an die Batterie angesetzten Zustand des Ladegeräts die Lüftungskanäle bilden. Es können insbesondere mindestens zwei Kühlrippen, vorzugsweise eine Vielzahl von Rippen und entsprechende Lüftungskanäle, vorgesehen sein. Die Ladegeräterückwand ist bei dieser Ausgestaltung also als Rippenkühlkörper ausgeprägt und bildet so in Verbindung mit der Batterie- bzw. Trogwand Lüftungskanäle, durch die die Luft gefördert wird.

Es ist eine Umlenkeinrichtung vorgesehen, mit der der Luftstrom nach Durchströmen der Lüftungskanäle umgelenkt wird, so dass er zum Abführen von aus der Batterie beim Ladevorgang austretendem Gas horizontal über die Oberseite der Batterie geführt wird. Der bzw. die Lüfter sind dabei so angeordnet, dass Luft von unten durch die Luftkanäle vertikal angesaugt oder gedrückt und über die Umlenkung innerhalb des Batterieraums horizontal über die Batterie gefördert wird. Die Umlenkeinrichtung ist bei an die Batterie angesetztem Ladegerät am oberen Rand der Außenfläche der Batterie bzw. der Trogwand angeordnet. Eine Umlenkung des Luftstroms nach Durchlaufen der Lüftungskanäle erfolgt um 90° und anschließend eine Förderung über die Oberseite der Batterie. Dabei wird das bei der Batterieladung freigesetzte Wasserstoffgas, das aus den Zellenentlüftungen der Batterie in den Batterieraum bzw. die Umgebungsluft austritt, abtransportiert. Das Luft-/Wasserstoffgasgemisch kann dann an der der Umlenkeinrichtung gegenüberliegenden Seite den Batterieraum des Fahrzeugs beispielsweise durch geeignete Luftschlitze verlassen.

Das Ladegerät kann eine Steuereinheit aufweisen, die die Lüftungseinrichtung und insbesondere die Lüfter steuert. Die Steuereinheit kann die Lüfterleistung in Abhängigkeit der jeweiligen Anforderungen steuern. Insbesondere kann dabei die jeweils auftretende höhere Anforderung (Kühlung des Ladegeräts oder Verhinderung eines zu hohen Wasserstoffgasanteils in der Luft) die Lüfterleistung bestimmen. Die Steuereinheit kann "intelligent" sein, also beispielsweise Daten über bisherige Lade-/Entladevorgänge oder den bisherigen Betrieb der Batterie und/oder des Ladegeräts speichern, darstellen und ggfs. bei Vorliegen bestimmter Bedingungen mit Warnhinweisen oder ähnlichem reagieren. Der Steuereinheit kann mindestens ein Temperatursensor zur Bestimmung der Temperatur des Ladegeräts zugeordnet sein, wobei an der Steuereinheit Messwerte des mindestens einen Temperatursensors anliegen. Die Lüftungseinrichtung kann dann durch die Steuereinheit in Abhängigkeit von den Messwerten des mindestens einen Temperatursensors steuerbar sein bzw. gesteuert werden. Auf diese Weise kann eine maximale Ladeleistung im jeweils zulässigen Temperaturbereich gewährleistet werden. Der Temperatursensor kann beispielsweise die Temperatur der Leistungselektronik des Ladegeräts erfassen.

Der Steuereinheit kann alternativ oder zusätzlich auch mindestens ein Ladesensor zur Bestimmung des Ladezustands der Batterie zugeordnet sein, wobei an der Steuereinheit Messwerte des mindestens einen Ladesensors anliegen. Die Lüftungseinrichtung kann dann durch die Steuereinheit in Abhängigkeit von den Messwerten des mindestens einen Ladesensors steuerbar sein bzw. gesteuert werden. Mit zunehmendem Ladezustand der Batterie nimmt die Entgasung der Batterie zu. Insbesondere findet ab einem Schwellenwert des Ladezustands eine erhebliche Entgasung statt. Aus der Messung des Ladezustands ist daher ein Rückschluss auf die Entgasung der Batterie möglich. Die Steuereinheit des Ladegeräts bestimmt dazu über den mindestens einen Ladesensor den Ladezustand der angeschlossenen Batterie und steuert die Lüfterleistung in Abhängigkeit des erreichten Ladezustands an. Auf diese Weise ist sichergestellt, dass es auch gegen Ende des Ladevorgangs nicht zu einer gefährlichen Gasbildung in dem Batterieraum kommt. Nach Ende des Ladevorgangs und Abschluss der Entgasung der Batterie kann der Lüfter wieder abgeschaltet werden.

Es ist auch möglich, dass der Steuereinheit mindestens ein Gassensor zur Bestimmung einer aus der Batterie austretenden Gasmenge zugeordnet ist, wobei an der Steuereinheit Messwerte des mindestens einen Gassensors anliegen. Die Lüftungseinrichtung kann dann durch die Steuereinheit in Abhängigkeit von den Messwerten des mindestens einen Gassensors steuerbar sein bzw. gesteuert werden. Mit dem Gassensor kann insbesondere eine Messung der aus der Batterie austretenden Wasserstoffmenge erfolgen. Dazu kann beispielsweise in dem Batterieraum über der Batterie die Wasserstoffkonzentration gemessen werden. Auf diese Weise kann in besonders zuverlässiger Weise eine gefährliche Gaskonzentration in dem Batterieraum verhindert werden.

Die erfindungsgemäße Lüftungseinrichtung kann durch die Steuereinheit nach unterschiedlichen Kriterien eingeschaltet, betrieben und ausgeschaltet werden. Mögliche alternativ oder in Kombination miteinander einsetzbare Einschaltkriterien sind ein Selbsttestbetrieb, ein Starten des Lüfters mit Beginn eines Ladevorgangs, ein Starten des Lüfters mit einer parametrierbaren Zeitverzögerung nach Start der Ladung, ein Erreichen eines Spannungswertes, der einer Ausgasungsspannung der Batteriezelle entspricht, also dem Schwellenwert, ab dem eine Ausgasung stattfindet, ein Messen der aus der Batterie austretenden Gaskonzentration mit Hilfe eines Sensors und Einschalten bei Erreichen eines parametrierbaren Schwellwertes, ein Start des Lüfters bei Erreichen eines parametrierbaren Temperaturschwellwertes für die Leistungselektronik des Ladegeräts usw.. Mögliche Betriebsarten des Lüfters während des Lüftungsbetriebs sind ein Betrieb mit konstanter (maximaler) Leistung, ein Betrieb mit getakteter konstanter (maximaler) Leistung, also ein Intervallbetrieb (Zweipunktregelung), ein Betrieb mit drehzahlveränderlicher Leistung in Abhängigkeit der Temperatur oder Gaskonzentration oder Ladespannung oder Zeit oder einer Kombination aus mindestens zwei der genannten Parameter usw.. Mögliche alternativ oder in Kombination einsetzbare Kriterien für das Ausschalten der Lüftungseinrichtung sind das Erreichen des Ladeendes der Batterie, das Erreichen des Ladeendes und der Ablauf einer parametrierbaren Nachlaufzeit des Lüfters, das Unterschreiten eines parametrierbaren Grenzwertes für die Gaskonzentration, oder das Unterschreiten eines parametrierbaren Grenzwertes für die Elektroniktemperatur des Ladegeräts, usw..

Die Erfindung löst die Aufgabe auch durch ein System bestehend aus einer Batterie eines Fahrzeugs, insbesondere eines Flurförderzeugs, und einem erfindungsgemäßen Ladegerät. Dabei kann das Ladegerät an die Batterie angesetzt sein.

Ein Ausführungsbeispiel der Erfindung wird nachfolgend anhand einer Zeichnung näher erläutert. Es zeigen schematisch:
- Fig. 1: einen Ausschnitt eines erfindungsgemäßen Systems gemäß einem ersten Ausführungsbeispiel in einer ersten seitlichen Ansicht,
- Fig. 2: das in Figur 1 dargestellte System in einer zweiten seitlichen Ansicht,
- Fig. 3: einen Ausschnitt des in den Figuren 1 und 2 dargestellten Systems in einer Draufsicht, und
- Fig. 4: ein erfindungsgemäßes System gemäß einem zweiten Ausführungsbeispiel in einer perspektivischen Ansicht.

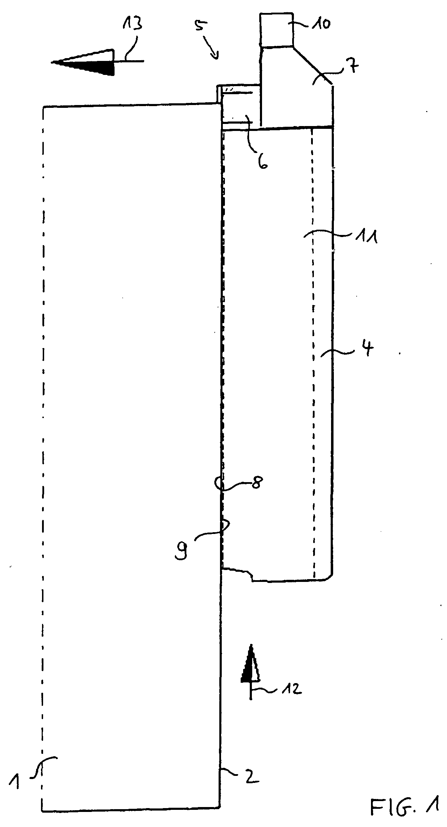

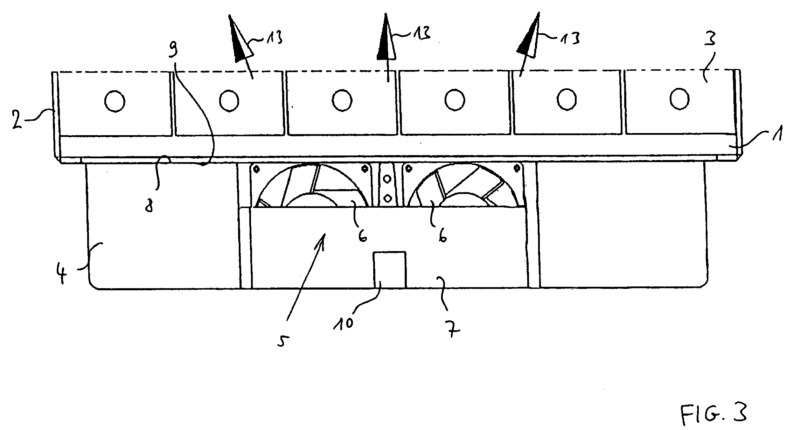

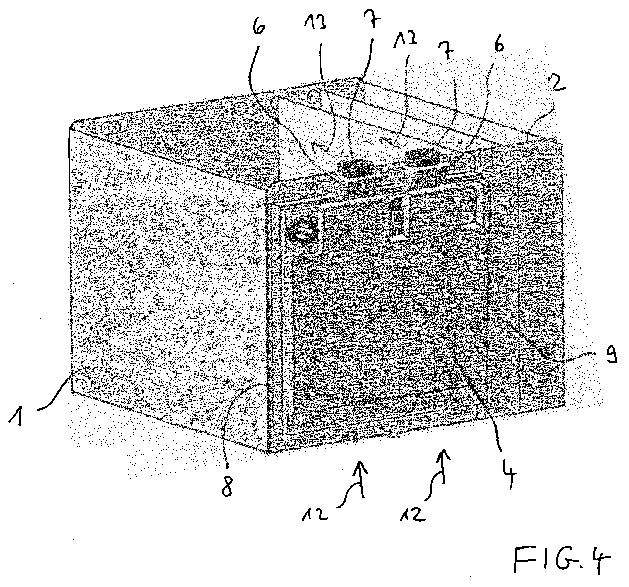

Gleiche Bezugszeichen bezeichnen gleiche Gegenstände. Insbesondere entspricht das System nach Figur 4 dem in den Figuren 1 bis 3 dargestellten System, soweit im Folgenden nichts anderes beschrieben ist. In den Figuren ist eine erfindungsgemäße Batterie 1 für ein Flurförderzeug dargestellt. Die Batterie 1 weist einen Batterietrog 2 und eine Mehrzahl in dem Batterietrog 2 angeordneter Batteriezellen 3 auf. In dem in Figur 4 gezeigten Beispiel ist aus Gründen der Übersichtlichkeit lediglich der Batterietrog 2 ohne die darin anzuordnenden Batteriezellen dargestellt. An die Batterie 1 angesetzt dargestellt ist in den Figuren ein Ladegerät 4 zum Laden der Batterie 1. Das Ladegerät 4 weist eine Lüftungseinrichtung 5 mit in dem dargestellten Beispiel zwei elektrischen Lüftern 6 auf. Weiterhin weist das Ladegerät eine am oberen Ende des Ladegeräts 4 angeordnete Umlenkeinrichtung 7 auf. Während die Umlenkeinrichtung 7 bei dem in den Figuren 1 bis 3 dargestellten Beispiel einteilig ausgebildet ist, ist bei dem in Figur 4 dargestellten Beispiel ein Paar von Umlenkern 7 vorgesehen, die gemeinsam eine Umlenkeinrichtung 7 bilden. Jeder der Umlenker 7 ist dabei jeweils einem der Lüfter 6 zugeordnet ist.

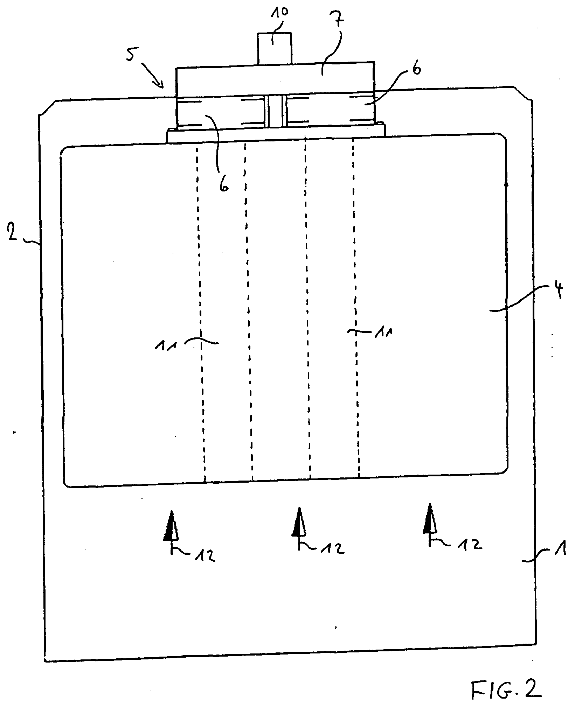

Das Ladegerät 4 ist mit seiner Außenfläche 8 an die dem Ladegerät 4 zugewandte Außenfläche 9 der Batterie 1 angesetzt. Im an die Batterie 1 angesetzten Zustand des Ladegeräts 4, wie in den Figuren dargestellt, sind entlang der der Batterie 1 zugewandten Außenfläche 8 des Ladegeräts 4 eine Mehrzahl von Lüftungskanälen 11 gebildet. Insbesondere ist die Außenfläche 8 des Ladegeräts 4 mit einer Mehrzahl von nicht näher dargestellten vertikal verlaufenden Kühlrippen versehen, die zwischen sich paarweise jeweils einen ebenfalls vertikal verlaufenden Lüftungskanal 11 bilden. Die Lüftungskanäle 11 sind in den Darstellungen der Figuren 1 bis 4 verdeckt. In Figur 1 und Figur 2 sind die Kanäle 11 jedoch gestrichelt zum Teil dargestellt. Aus Gründen der Übersichtlichkeit sind dabei nur zwei der Lüftungskanäle 11 gezeigt. Es kann selbstverständlich auch eine größere Anzahl Lüftungskanäle 11 vorgesehen sein.

Im Betrieb werden die elektrischen Lüfter 6 der Lüftungseinrichtung von einer in den Figuren 1 bis 3 lediglich schematisch dargestellten Steuereinheit 10 des Ladegeräts 4 angesteuert. In dem Ausführungsbeispiel nach Figur 4 ist die Steuereinheit aus Gründen der Übersichtlichkeit nicht dargestellt. Dennoch weist auch das in Figur 4 gezeigte Ladegerät 4 eine entsprechende Steuereinheit 10 auf. Der Steuereinheit 10 können in den Figuren nicht dargestellte Temperatursensoren zur Bestimmung der Temperatur des Ladegeräts, insbesondere der Leistungselektronik des Ladegeräts, Ladesensoren zur Bestimmung des Ladezustands der Batterie und/oder Gassensoren zur Bestimmung einer aus der Batterie 1 austretenden Gasmenge zugeordnet sein. Die Messwerte der Sensoren können jeweils an der Steuereinheit 10 anliegen. Die Steuerung der Lüftungseinrichtung 5 und insbesondere der elektrischen Lüfter 6 durch die Steuereinheit 10 kann dann in Abhängigkeit von den Messwerten eines oder mehrerer der Sensoren sowie weiterer Parameter, wie beispielsweise der Zeit, erfolgen.

Beim Laden der Batterie 1 kommt es zu einer Erwärmung des Ladegeräts 4. Daher muss das Ladegerät 4 gekühlt werden. Gleichzeitig kommt es insbesondere gegen Ende eines Ladevorgangs der Batterie 1 zu einem Austreten von Gas, insbesondere Wasserstoffgas, an der Oberseite der Batterie 1. Die Ansteuerung der Lüfter 6 durch die Steuereinheit 10 führt zu einem Ansaugen von Luft durch die Lüftungskanäle 11 in einer vertikal nach oben weisenden Richtung, wie in den Figuren durch Pfeile 12 veranschaulicht. Sobald der auf diese Weise erzeugte, durch die Lüftungskanäle 11 aufgeteilte Luftstrom die Umlenkeinrichtung 7 erreicht, wird er durch diese um 90° umgelenkt, so dass er in horizontaler Richtung über die Oberseite der Batterie 1 geführt wird, wie in den Figuren durch Pfeile 13 veranschaulicht. Der in vertikaler Richtung durch die Lüftungskanäle 11 des Ladegeräts 4 geführte Luftstrom führt zu einer Abkühlung des Ladegeräts 4 und insbesondere der Leistungselektronik des Ladegeräts. Anschließend wird durch den mittels der Umlenkeinrichtung 7 umgelenkten Luftstrom aus der Batterie 1 nach oben austretendes Wasserstoffgas aus dem die Batterie 1 aufnehmenden Batterieraum abgeführt, beispielsweise über entsprechende Lüftungsschlitze in dem Batterieraum. Auf diese Weise ist sichergestellt, dass es in dem Batterieraum nicht zu einem zündfähigen Gemisch aus Wasserstoff- und Sauerstoffgas kommen kann. Erfindungsgemäß wird dabei mittels nur einer Lüftungseinrichtung 5 und dabei mit nur einem Luftstrom sowohl eine Kühlung des Ladegeräts 4 als auch ein Abführen von aus der Batterie 1 austretenden Gasen erreicht.

## Patentansprüche

1. Ladegerät für eine Batterie (1) eines Fahrzeugs, insbesondere eines Flurförderzeugs, wobei das Ladegerät (4) zum Laden der Batterie (1) mit seiner Außenfläche an die zugewandte Außenfläche der Batterie (1) ansetzbar ist, wobei ferner das Ladegerät (4) eine Lüftungseinrichtung (5) mit mindestens einem Lüfter (6) zum Fördern eines Luftstroms aufweist, wobei mit dem Luftstrom sowohl das Ladegerät (4) gekühlt, als auch aus der Batterie (1) beim Ladevorgang austretendes Gas abgeführt wird, **dadurch gekennzeichnet, dass** entlang der der Batterie zugewandten Außenfläche des Ladegeräts (4) eine Mehrzahl von vertikalen Lüftungskanälen (11) gebildet ist, wodurch der Luftstrom entlang der dem Ladegerät zugewandten Außenfläche geführt wird und dass eine Umlenkeinrichtung (7) bei an die Batterie angesetztem Ladegerät am oberen Rand der Außenfläche der Batterie vorgesehen ist, mit der der Luftstrom nach Durchströmen der vertikalen Lüftungskanäle (11) so umgelenkt wird, dass er zum Abführen von aus der Batterie (1) beim Ladevorgang austretendem Gas horizontal über die Oberseite der Batterie (1) geführt wird.

2. Ladegerät nach Anspruch 1, **dadurch gekennzeichnet, dass** die im an die Batterie (1) angesetzten Zustand des Ladegeräts (4) der Batterie (1) zugewandte Außenfläche (8) des Ladegeräts (4) Kühlrippen aufweist, die im an die Batterie (1) angesetzten Zustand des Ladegeräts (4) Lüftungskanäle (11) bilden.

3. Ladegerät nach Anspruch 1 oder 2, **dadurch gekennzeichnet, dass** es eine Steuereinheit (10) aufweist, mit der die Lüftungseinrichtung (5) steuerbar ist.

4. Ladegerät nach Anspruch 3, **dadurch gekennzeichnet, dass** der Steuereinheit (10) mindestens ein Temperatursensor zur Bestimmung der Temperatur des Ladegeräts (4) zugeordnet ist, wobei an der Steuereinheit (10) Messwerte des mindestens einen Temperatursensors anliegen.

5. Ladegerät nach Anspruch 4, **dadurch gekennzeichnet, dass** die Lüftungseinrichtung (5) durch die Steuereinheit (10) in Abhängigkeit von den Messwerten des mindestens einen Temperatursensors steuerbar ist.

6. Ladegerät nach einem der Ansprüche 3 bis 5, **dadurch gekennzeichnet, dass** der Steuereinheit (10) mindestens ein Ladesensor zur Bestimmung des Ladezustands der Batterie (1) zugeordnet ist, wobei an der Steuereinheit (10) Messwerte des mindestens einen Ladesensors anliegen.

7. Ladegerät nach Anspruch 6, **dadurch gekennzeichnet, dass** die Lüftungseinrichtung (5) durch die Steuereinheit (10) in Abhängigkeit von den Messwerten des mindestens einen Ladesensors steuerbar ist.

8. Ladegerät nach einem der Ansprüche 3 bis 7, **dadurch gekennzeichnet, dass** der Steuereinheit (10) mindestens ein Gassensor zur Bestimmung einer aus der Batterie (1) austretenden Gasmenge zugeordnet ist, wobei an der Steuereinheit (10) Messwerte des mindestens einen Gassensors anliegen.

9. Ladegerät nach Anspruch 8, **dadurch gekennzeichnet, dass** die Lüftungseinrichtung (5) durch die Steuereinheit (10) in Abhängigkeit von den Messwerten des mindestens einen Gassensors steuerbar ist.

## Claims

1. Charger for a battery (1) of a vehicle, in particular a forklift truck, wherein, in order to charge the battery (1), the charger (4) can be attached by its external surface to the facing external surface of the battery (1), wherein further the charger (4) has a venting device (5) with at least one ventilator (6) for conveying an airflow, wherein the airflow both cools the charger (4) and discharges gas escaping from the battery (1) during the charging process, **characterised in that** a plurality of vertical venting ducts (11) is formed along the external surface of the charger (4), facing the battery, whereby the airflow is guided along the external surface facing the charger and **in that**, when the charger is attached to the battery, on the upper edge of the external surface of the battery, a diverting device (7) is provided, by means of which the airflow, after it has flown through the vertical venting ducts (11), is diverted such that it is guided horizontally over the upper side of the battery (1), in order to discharge gas escaping from the battery (1) during the charging process.

2. Charger according to claim 1, **characterised in that**, when the charger (4) is attached to the battery (1), the external surface (8) of the charger (4) facing the battery (1) has cooling fins which form venting ducts (11) when the charger (4) is attached to the battery (1).

3. Charger according to claim 1 or 2, **characterised in that** it has a control unit (10) by which the venting device (5) can be controlled.

4. Charger according to claim 3, **characterised in that** at least one temperature sensor for determining the temperature of the charger (4) is allocated to the control unit (10), wherein measurements of the at least one temperature sensor are present at the control unit (10).

5. Charger according to claim 4, **characterised in that** the venting device (5) can be controlled by means of the control unit (10), depending on the measurements of the at least one temperature sensor.

6. Charger according to one of claims 3 to 5, **characterised in that** at least one charge sensor for determining the charge status of the battery (1) is allocated to the control unit (10), wherein measurements of the at least one charge sensor are present at the control unit (10).

7. Charger according to claim 6, **characterised in that** the venting device (5) can be controlled by means of the control unit (10), depending on the measurements of the at least one charge sensor.

8. Charger according to one of claims 3 to 7, **characterised in that** at least one gas sensor for determining a quantity of gas escaping from the battery (1) is allocated to the control unit (10), wherein measurements of the at least one gas sensor are present at the control unit (10).

9. Charger according to claim 8, **characterised in that** the venting unit (5) can be controlled by means of the control unit (10), depending on the measurements of the at least one gas sensor.

## Revendications

1. Appareil de chargement pour une batterie (1) d'un véhicule, en particulier un chariot de manutention, l'appareil de chargement (4) pouvant être appliqué avec sa face extérieure sur la face extérieure de la batterie (1) tournée vers celle-ci pour le chargement de la batterie (1), l'appareil de chargement (4) présentant en outre un dispositif de ventilation (5) avec au moins un ventilateur (6) pour le transport d'un flux d'air, le flux d'air permettant à la fois de refroidir l'appareil de chargement (4) et d'évacuer du gaz sortant de la batterie (1) pendant l'opération de chargement, **caractérisé en ce qu'**une pluralité de canaux de ventilation verticaux (11) est formée le long de la face extérieure de l'appareil de chargement (4) qui est tournée vers la batterie, pour ainsi guider le flux d'air le long de la face extérieure tournée vers l'appareil de chargement, et **en ce qu'**il est prévu un dispositif de déviation (7) sur le bord supérieur de la face extérieure, lorsque l'appareil de chargement est appliqué sur la batterie, avec lequel le flux d'air est dévié après avoir traversé les canaux de ventilation verticaux (11), de telle façon que du gaz sortant de la batterie (1) pendant l'opération de chargement est guidé horizontalement au-dessus de la face supérieure de la batterie (1).

2. Appareil de chargement selon la revendication 1, **caractérisé en ce que** la face extérieure (8) de l'appareil de chargement (4) tournée vers la batterie (1) lorsque l'appareil de chargement (4) est appliqué sur la batterie (1) présente des nervures de refroidissement formant des canaux de ventilation (11) lorsque l'appareil de chargement (4) est appliqué sur la batterie (1).

3. Appareil de chargement selon la revendication 1 ou 2, **caractérisé en ce qu'**il présente une unité de commande (10) permettant de commander le dispositif de ventilation (5).

4. Appareil de chargement selon la revendication 3, **caractérisé en ce qu'**au moins un capteur de température destiné à déterminer la température de l'appareil de chargement (4) est attribué à l'unité de commande (10), des valeurs de mesure de l'au moins un capteur de température étant appliquées sur l'unité de commande (10).

5. Appareil de chargement selon la revendication 4, **caractérisé en ce que** le dispositif de ventilation (5) peut être commandé par l'unité de commande (10) en fonction des valeurs de mesure de l'au moins un capteur de température.

6. Appareil de chargement selon l'une des revendications 3 à 5, **caractérisé en ce qu'**au moins un capteur de chargement destiné à déterminer l'état de chargement de la batterie (1) est attribué à l'unité de commande (10), des valeurs de mesure de l'au moins un capteur de chargement étant appliquées sur l'unité de commande (10).

7. Appareil de chargement selon la revendication 6, **caractérisé en ce que** le dispositif de ventilation (5) peut être commandé par l'unité de commande (10) en fonction des valeurs de mesure de l'au moins un capteur de chargement.

8. Appareil de chargement selon l'une des revendications 3 à 7, **caractérisé en ce qu'**au moins un capteur de gaz destiné à déterminer une quantité de gaz sortant de la batterie (1) est attribué à l'unité de commande (10), des valeurs de mesure de l'au moins un capteur de gaz étant appliquées sur l'unité de commande (10).

9. Appareil de chargement selon la revendication 8, **caractérisé en ce que** le dispositif de ventilation (5) peut être commandé par l'unité de commande (10) en fonction des valeurs de mesure de l'au moins un capteur de gaz.
